# EUROPÄISCHE PATENTSCHRIFT

(11) **EP 0 929 979 B1**
(45) Veröffentlichungstag und Bekanntmachung des Hinweises auf die Patenterteilung: **10.03.2004**
(21) Anmeldenummer: 97909151.9
(22) Anmeldetag: 18.09.1997
(51) Int. Cl.: H04Q 3/62, H04M 3/46

(54) **KOMMUNIKATIONSSYSTEM AUS MINDESTENS ZWEI NEBENSTELLENANLAGEN MIT TEAMFUNKTION**
COMMUNICATIONS SYSTEM CONSISTING OF AT LEAST TWO PRIVATE BRANCH EXCHANGES WITH TEAM FUNCTION
SYSTEME DE COMMUNICATION CONSTITUE D'AU MOINS DEUX INSTALLATIONS D'ABONNES AVEC POSTE SUPPLEMENTAIRE A FONCTION D'EQUIPE

(30) Priorität: 30.09.1996 DE 19640265
(43) Veröffentlichungstag der Anmeldung: 21.07.1999
(73) Patentinhaber: SIEMENS AKTIENGESELLSCHAFT, 80333 München (DE)
(72) Erfinder: WILLE, Klaus, D-81679 München (DE)
(86) Internationale Anmeldenummer: PCT/DE1997/002112
(87) Internationale Veröffentlichungsnummer: WO 1998/015134

(56) Entgegenhaltungen:
- US-A- 5 253 288
- US-A- 5 521 970
- DEHLEN H: "VERNETZTE TK-ANLAGEN OHNE GRENZEN" NTZ NACHRICHTENTECHNISCHE ZEITSCHRIFT, Bd. 45, Nr. 9, 1.September 1992, Seiten 714-716, 718 - 721, XP000310768
- HOCHREUTER D ET AL: "HICOM 300 1 EINE VIELFALT NEUER MOGLICHKEITEN" TELCOM REPORT, Bd. 18, Nr. 5, 1.September 1995, Seiten 265-267, XP000543153
- BOOM W ET AL: "NEW GROUP FEATURE COLLECTION FOR SOPHO-S ISPBXS" PHILIPS TELECOMMUNICATION REVIEW, Bd. 51, Nr. 3, 1.Dezember 1993, Seiten 10-16, XP000457193
- EBERL L H ET AL: "INTEGRATED ISDN D-SERVER FOR INTELLIGENT NETWORKING" COMMUNICATIONS TECHNOLOGY FOR THE 1990'S AND BEYOND, DALLAS, NOV. 27 - 30, 1989, Bd. 1 OF 3, 27.November 1989, INSTITUTE OF ELECTRICAL AND ELECTRONICS ENGINEERS, Seiten 539-542, XP000091154
- FURSAT J C ET AL: "DYNAMIC VIRTUAL COMMUNICATION NETWORKS: THE TELCOM EUROPE RANGE" COMMUTATION ET TRANSMISSION, Bd. 14, Nr. 1, 1.Januar 1992, Seiten 39-48, XP000257951
- MARKKU KORPI: "GLOBAL VERNETZT MIT CORNET D-KANAL-PROTOKOLL BASIERT AUF NATIONALEN UND INTERNATIONALEN NORMEN" TELCOM REPORT, Bd. 15, Nr. 6, 1.November 1992, Seiten 284-287, XP000343333
- FLIEDNER B: "PRIVATE NETZE AUF DEM WEG IN DIE ZUKUNFT DURCHGANGIGE SERVICELEISTUNGEN SICHERN MARKTCHANCEN FUR UNTERNEHMEN" TELCOM REPORT, Bd. 18, Nr. 2, 1.März 1995, Seiten 75-77, XP000510937
- DAVIS M ET AL: "EVOLUTION IN BUSINESS NETWORKING" TELESIS, Bd. 15, Nr. 3, 1988, Seiten 23-25, 28 - 31, XP000007730

## Beschreibung

Die Erfindung betrifft ein Kommunikationssystem, das aus mindestens zwei Nebenstellenanlagen, jeweils mit einer Vermittlungssteuerung und mindestens einem Vermittlungsknoten, der über eine Netzanschlußeinrichtun an mindestens ein übergeordnetes Kommunikationsnetz angeschlossen ist und über mindestens eine Teilnehmeranschlußeinrichtung an Endgeräte angeschlossen ist, wobei in einer der Nebenstellenanlagen eine Teamfunktionssteuerung vorgesehen ist, die bestimmte Endgeräte als über den Vermittlungsknoten dieser Nebenstellenanlage anrufbare Teamendgeräte eines Teams gemäß einer Teamfunktion steuert und hierbei abhängig vom vermittlungstechnischen Zustand einzelner Teamendgeräte eine Signalisierung zu anderen Teamendgeräten veranlaßt sowie deren vermittlungstechnischen Zustand beeinflußt.

Ein solches Kommunikationssystem ist z.B. aus dem Artikel von H. Dehlen: "Vernetzte TK-Anlagen ohne Grenzen"; NTZ Nachrichtentechnische Zeitschrift, Bd. 45, Nr. 9, 1.september 1992, Seiten 714-721, XP000310768, bekannt.

Solche zusammengeschalteten Nebenstellenanlagen, von denen in mindestens einer eine Teamfunktion realisiert ist, sind u.a. in Form der von der Siemens AG kommerziell vertriebenen Nebenstellenanlage HICOM 300 bekannt. Eine bekannte Teamfunktion ist beispielsweise die Funktion "Anrufübernahme", bei der kommende Rufe innerhalb einer Anrufübernahmegruppe aus mehreren Endgeräten angezeigt werden und an jedem Endgerät, das zur Anrufübernahmegruppe gehört, entgegengenommen werden kann. Eine andere bekannte Teamfunktion ist die Funktion "Sammelanschluß", der unter einer speziellen Sammelnummer erreichbar ist. Hierbei kann jeder Teilnehmer eines Sammelanschlusses auch unmittelbar über eine individuelle Rufnummer angerufen werden. Über die spezielle Sammelnummer werden jedoch alle Teilnehmer erreicht. Die Sammelnummer ist beispielsweise einem Master-Endgerät zugeordnet.

Eine weitere bekannte Teamfunktion ist die integrierte Vorzimmeranlage, die auch Chef-Sekretär-Anlage genannt wird.

Bei bekannten Kommunikationssystemen sind alle Teilnehmer eines Teams an eine einzige Nebenstellenanlage angeschlossen und werden über dieselbe Netzanschlußeinrichtung an ein übergeordnetes Kommunikationsnetz vermittelt.

Aufgabe der Erfindung ist es, ein Kommunikationssystem bereitzustellen, bei dem eine Teamfunktion auch mit abgesetzten Teamteilnehmern realisierbar ist.

Diese Aufgabe löst die Erfindung durch ein Kommunikationssystem mit den Merkmalen des Anspruches 1.

Erfindungsgemäß ist vorgesehen, daß mindestens ein erstes Teamendgerät des Teams unmittelbar über eine Teilnehmeranschlußeinrichtung an einen Vermittlungsknoten der ersten Nebenstellenanlage angeschlossen ist und mindestens ein zweites Teamendgerät als abgesetzter Teilnehmer des Teams über eine Teilnehmeranschlußeinheit an einen Vermittlungsknoten der zweiten Nebenstellenanlage als Endgerät angeschlossen ist, wobei dieser abgesetzte Teilnehmer über den Vermittlungsknoten der ersten Nebenstellenanlage, eine Hotline-Verbindung zwischen der ersten und der zweiten Nebenstellenanlage und einen Vermittlungsknoten der zweiten Nebenstellenanlage erreichbar ist.

In der ersten Nebenstellenanlage ist eine Teamfunktionssteuerung vorgesehen. Daher werden, falls für das Team kommenden Rufe im Normalfall über die erste Kommunikationseinrichtung geführt. Für das Team kommende Rufe können jedoch sowohl über eine Netzanschlußeinrichtung der ersten Nebenstellenanlage als auch über eine Netzanschlußeinrichtung der zweiten Nebenstellenanlage in das Kommunikationssystem gelangen. Über eine Netzanschlußeinrichtung der zweiten Nebenstellenanlage in das Kommunikationssystem gelangende kommende Rufe für das Team werden normalerweise durch eine Anrufumleitungsfunktion zu der in der ersten Nebenstellenanlage vorgesehene Teamfunktionssteuerung umgeleitet. Falls die Hotline-Verbindung zur ersten Nebenstellenanlage oder deren Vermittlungsknoten gestört ist, hebt eine Teamfunktionssubsteuerung die Anrufumleitung auf und übernimmt die lokale Teamfunktionsablaufsteuerung.

Der Anschluß von Teamendgeräten als abgesetzte Teilnehmer über eine Hotline-Verbindung ermöglicht es, Teilnehmer eines Teams innerhalb eines Firmennetzes in beliebigem räumlichem Abstand zueinander anzuordnen.

Eine besonders günstige Ausgestaltungsform eines erfindungsgemäßen Kommunikationssystems sieht vor, daß die Teamfunktionssubsteuerung die Verfügbarkeit der Hotline-Verbindung zwischen den beiden Nebenstellenanlagen durch Prüfung der für die transparente Übertragung der Teilnehmer-zu-Teilnehmer-Meldungen für die abgesetzten Teilnehmer erforderlichen Signalisierungsverbindung erfaßt. In diesem Fall benötigt die Verfügbarkeitsprüfung keine B-Kanal-Ressourcen. Außerdem ist keine zusätzliche Signalisierung erforderlich.

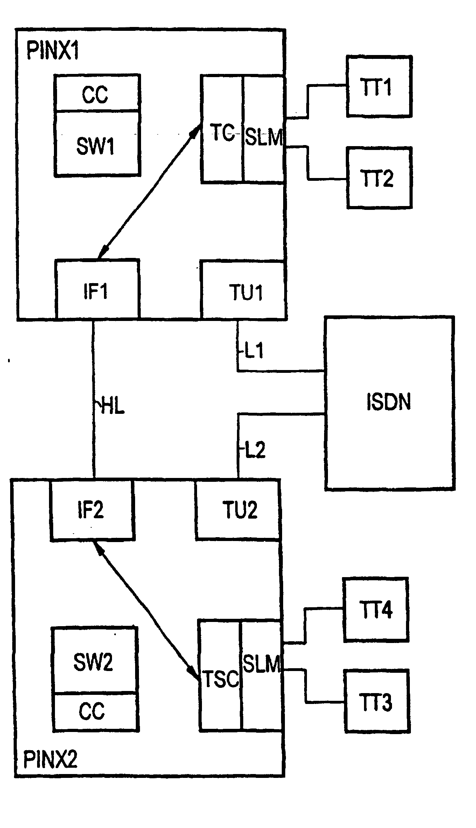

Nachstehend wird die Erfindung anhand eines Ausführungsbeispiels unter Bezugnahme auf die Figur näher erläutert.

Die Figur zeigt in schematischer Blockdarstellung ein erfindungsgemäßes Kommunikationssystem.

Die schematische Blockdarstellung der Figur zeigt ein Kommunikationssystem, bestehend aus einer ersten Nebenstellenanlage PINX1 mit einer Vermittlungssteuerung CC, einem ersten Vermittlungsknoten SW1, einer Teamfunktionssteuerung TC und einer ersten Netzanschlußeinrichtung TU1, die über eine Verbindung L1 mit einem übergeordneten Kommunikationsnetz ISDN verbunden ist. Ein Teamendgerät TT1 und ein Team-Ersatzendgerät TT2 sind jeweils über eine Teilnehmeranschlußeinrichtung SLM an den ersten Vermittlungsknoten SW1 angeschlossen und werden von der Teamfunktionssteuerung TC gesteuert. Die Teamfunktionssteuerung TC steuert außerdem eine Verbindung zu einer ersten Hotline-Schnittstelle IF1.

Die zweite Nebenstellenanlage PINX2 enthält eine Vermittlungssteuerung CC und einen zweiten Vermittlungsknoten SW2, an den u.a. über eine Teilnehmeranschlußeinrichtung SLM zwei Teamendgeräte TT3 und TT4 angeschlossen sind. Die zweite Nebenstellenanlage PINX2 ist über eine zweite Netzanschlußeinrichtung TU2 und eine Verbindung L2 an das übergeordnete Kommunikationsnetz ISDN angeschlossen.

Eine Teamfunktionssubsteuerung TSC steuert die Teamendgeräte TT3 und TT4 und außerdem eine Verbindung zu einer zweiten Hotline-Schnittstelle IF2. Die erste Hotline-Schnittstelle IF1 der.ersten Nebenstellenanlage PINX1 ist über eine Hotline-Verbindung HL mit der zweiten Hotline-Schnittstelle IF2 der zweiten Nebenstellenanlage PINX2 verbunden.

Für das Team kommende Rufe werden im Normalfall über die erste Kommunikationseinrichtung geführt. Für das Team kommende Rufe können jedoch sowohl über eine Netzanschlußeinrichtung TU1 der ersten Nebenstellenanlage PINX1 als auch über eine Netzanschlußeinrichtung TU2 der zweiten Nebenstellenanlage PINX2 in das Kommunikationssystem gelangen. Über eine Netzanschlußeinrichtung TU2 der zweiten Nebenstellenanlage PINX2 in das Kommunikationssystem gelangende kommende Rufe für das Team werden normalerweise durch eine Anrufumleitungsfunktion zu der in der ersten Nebenstellenanlage vorgesehene Teamfunktionssteuerung umgeleitet. Falls die Hotline-Verbindung HL zur ersten Nebenstellenanlage PINX1 oder deren Vermittlungsknoten SW1 gestört ist, hebt eine Teamfunktionssubsteuerung TSC die Anrufumleitung auf und übernimmt die lokale Teamfunktionsablaufsteuerung.

## Patentansprüche

1. Kommunikationssystem, bestehend aus mindestens einer ersten Nebenstellenanlage (PINX1) mit einer Vermittlungssteuerung (CC) und mindestens einem ersten Vermittlungsknoten (SW1), der über eine erste Netzanschlußeinrichtung (TU1) an mindestens ein übergeordnetes Kommunikationsnetz (ISDN) angeschlossen ist und über mindestens eine Teilnehmeranschlußeinrichtung (SLM) an Endgeräte (TT1, TT2) angeschlossen ist, und bestehend aus mindestens einer zweiten Nebenstellenanlage mit einer Vermittlungssteuerung (CC) und mindestens einem zweiten Vermittlungsknoten (SW2), der über eine zweite Netzanschlußeinrichtung (TU2) an das übergeordnete Kommunikationsnetz (ISDN) angeschlossen ist und über mindestens eine Teilnehmeranschlußeinrichtung (SLM) an Endgeräte (TT3, TT4) angeschlossen ist, wobei in der ersten Nebenstellenanlage (PINX1) eine Teamfunktionssteuerung (TC) vorgesehen ist, die bestimmte Endgeräte als über den ersten Vermittlungsknoten (SW1) anrufbare Teamendgeräte eines Teams gemäß einer Teamfunktion steuert und hierbei abhängig vom vermittlungstechnischen Zustand einzelner Teamendgeräte eine Signalisierung zu anderen Teamendgeräten veranlaßt sowie deren vermittlungstechnischen Zustand beeinflußt, **dadurch gekennzeichnet, daß** mindestens ein erstes Teamendgerät (TT1) des Teams unmittelbar über eine Teilnehmeranschlußeinrichtung (SLM) an den ersten Vermittlungsknoten (SW1) als Endgerät angeschlossen ist und mindestens ein zweites Teamendgerät (TT3, TT4) als abgesetzter Teilnehmer des Teams über eine Teilnehmeranschlußeinheit (SLM) an den zweiten Vermittlungsknoten (SW2) angeschlossen ist und über den ersten Vermittlungsknoten (SW1), eine Hotline-Verbindung (HL) zwischen dem ersten und dem zweiten Vermittlungsknoten (SW1, SW2) und den zweiten Vermittlungsknoten (SW2) erreichbar ist, daß für das Team kommende Rufe unmittelbar über die erste Netzanschlußeinrichtung (TU1) und über die zweite Netzanschlußeinrichtung (TU2) und eine Anrufumleitungsfunktion der zweiten Nebenstellenanlage (PINX2) zur Teamfunktionssteuerung (TC) gelangen können und daß eine Teamfunktionssubsteuerung (TSC) in der zweiten Nebenstellenanlage (PINX2), wenn sie erkennt, daß die Hotline-Verbindung (HL) zur ersten Nebenstellenanlage (PINX1) gestört ist, diese Anrufumleitung aufhebt und eine lokale Teamfunktionsablaufsteuerung ausführt.

2. Kommunikationssystem nach Anspruch 1, **dadurch gekennzeichnet, daß** die Teamfunktionssubsteuerung (TSC) eine Verfügbarkeit der Hotline-Verbindung (HL) zwischen dem ersten und dem zweiten Vermittlungsknoten (SW1, SW2) durch Prüfung der für die transparente Übertragung der Teilnehmer-zu-Teilnehmer-Meldungen für die abgesetzten Teilnehmer erforderlichen Signalisierungsverbindung erkennt.

## Claims

1. Communications system comprising at least one first private branch exchange (PINX1) with a switching controller (CC) and at least one first switching node (SW1), which is connected via a first network connection device (TU1) to at least one higher-order communications network (ISDN) and is connected via at least one user access device (SLM) to terminals (TT1, TT2), and comprising at least one second private branch exchange with a switching controller (CC) and at least one second switching node (SW2), which is connected via a second network connection device (TU2) to the higher-order communications network (ISDN) and via at least one user access device (SLM) to terminals (TT3, TT4), whereby a team function controller (TC) is provided in the first private branch exchange (PINX1), which controls specific terminals as team terminals of a team which can be called via the first switching node (SW1) according to a team function and hereby initiates signaling to other team terminals based on the switching status of individual team terminals and influences their switching status, **characterized in that** at least one first team terminal (TT1) of the team is connected directly via a user access device (SLM) to the first switching node (SW1) as a terminal and at least one second team terminal (TT3, TT4) is connected as a remote user of the team via a user access unit (SLM) to the second switching node (SW2) and can be accessed via the first switching node (SW1), a hot line connection (HL) between the first and second switching nodes (SW1, SW2) and the second switching node (SW2), that incoming calls for the team can reach the team function controller (TC) directly via the first network connection device (TU1) and via the second network connection device (TU2) and a call divert function of the second private branch exchange (PINX2) and that a team function subcontroller (TSC) in the second private branch exchange (PINX2), when it identifies that the hotline connection (HL) to the first private branch exchange (PINX1) is defective, cancels this call divert and executes a local team function process control.

2. Communications system according to Claim 1, **characterized in that** the team function subcontroller (TSC) logs the availability of the hotline connection (HL) between the first and second switching nodes (SW1, SW2) by testing the signaling connection required for remote users for the transparent transmission of user to user messages.

## Revendications

1. Système de communication constitué d'au moins une première installation d'abonné avec postes supplémentaires (PINX1) avec une commande de commutation (CC) et au moins un premier noeud de commutation (SW1) raccordé à au moins un réseau de communication supérieur (ISDN) par l'intermédiaire d'un premier dispositif de raccordement réseau (TU1) et à des terminaux (TT1, TT2) par l'intermédiaire d'au moins un dispositif de raccordement d'abonné (SLM), et constitué d'au moins une deuxième installation d'abonné avec postes supplémentaires avec une commande de commutation (CC) et au moins un deuxième noeud de commutation (SW2) raccordé audit réseau de communication supérieur (ISDN) par l'intermédiaire d'un deuxième dispositif de raccordement réseau (TU2) et à des terminaux (TT3, TT4) par l'intermédiaire d'au moins un dispositif de raccordement d'abonné (SLM), une commande de fonction d'équipe (TC) étant prévue dans la première installation d'abonnés avec postes supplémentaires (PINX1), laquelle commande certains terminaux en tant que terminaux d'équipe d'une équipe appelables par l'intermédiaire du premier noeud de commutation (SW1) conformément à une fonction d'équipe tout en provoquant une signalisation vers d'autres terminaux d'équipe en dépendance de l'état de commutation de terminaux d'équipe individuels et en influençant leur état de commutation, **caractérisé en ce qu'**au moins un premier terminal d'équipe (TT1) de l'équipe est directement raccordé en tant que terminal au premier noeud de commutation (SW1) par l'intermédiaire d'un dispositif de raccordement d'abonné (SLM) et **en ce qu'**au moins un deuxième terminal d'équipe (TT3, TT4) est raccordé en tant que terminal de poste de travail de l'équipe au deuxième noeud de commutation (SW2) par l'intermédiaire d'une unité de raccordement d'abonné (SLM) et est joignable par l'intermédiaire du premier noeud de commutation (SW1), d'une liaison hotline (HL) entre le premier et le deuxième noeuds de commutation (SW1, SW2) et du deuxième noeud de commutation (SW2), **en ce que** les appels entrants adressés à l'équipe peuvent directement arriver à la commande de fonction d'équipe (TC) par l'intermédiaire du premier dispositif de raccordement réseau (TU1) ainsi que par l'intermédiaire du deuxième dispositif de raccordement réseau (TU2) et d'une fonction de renvoi d'appel de la deuxième installation d'abonné avec postes supplémentaires (PINX2) et **en ce qu'**une sous-commande de fonction d'équipe (TSC) de la deuxième installation d'abonné avec postes supplémentaires (PINX2), lorsqu'elle identifie une perturbation de la liaison hotline (HL) vers la première installation d'abonné avec postes supplémentaires (PINX1), annule ce renvoi d'appel et exécute une commande locale du déroulement de la fonction d'équipe.

2. Système de communication selon la revendication 1, **caractérisé en ce que** la sous-commande de fonction d'équipe (TSC) identifie une disponibilité de la liaison hotline (HL) entre le premier et le deuxième noeuds de commutation (SW1, SW2) par contrôle de la liaison de signalisation nécessaire pour les terminaux de poste de travail aux fins de la transmission transparente des messages d'abonné à abonné.
